# EUROPEAN PATENT SPECIFICATION

(11) **EP 0 681 185 B1**
(45) Date of publication and mention of the grant of the patent: **27.01.1999**
(21) Application number: 95106497.1
(22) Date of filing: 28.04.1995
(51) Int. Cl.: G01P 3/44

(54) **A sensor and sealing unit for a rolling bearing**
Mess- und Dichtungsanordnung für Wälzlager
Unité de mesure et d'étanchéité pour palier de roulement

(30) Priority: 03.05.1994 IT TO940352
(43) Date of publication of application: 08.11.1995
(73) Proprietor: SKF INDUSTRIE S.p.A., I-10128 Torino (IT)
(72) Inventor: Peretti, Pietro Antonio, I-10060 Piscina (IT); Vignotto, Angelo, I-10134 Torino (IT)
(74) Representative: Plebani, Rinaldo

(56) References cited:
- DE-U- 9 214 980
- FR-A- 2 669 728
- PATENT ABSTRACTS OF JAPAN vol. 8 no. 10 (P-248) [1447] ,18 January 1984 & JP-A-58 171673 (NISSAN JIDOSHA K.K.)

## Description

The present invention relates to a sensor and sealing unit for a rolling bearing.

In particular, the multi-functional unit according to the present invention is of the type comprising a sealed assembly for protecting the rolling bodies of the bearing from external contaminants and, at the same time, for holding the lubricating grease within the bearing, and a signalling member fixed to a rotatable element of the bearing and adapted to cooperate with a detector device outside the unit and fixable to a fixed element of the bearing to detect the speed of rotation of the movable element of the bearing and/or of any mechanical member fixed thereto such as, for example, a wheel of a vehicle.

Units of the type specified above are known in which the signalling member is fixed to a shield of the sealing assembly by a specific locking support; more particularly, a unit is known from European Patent EP 0378939-B1 in which the signalling member, constituted by a magnetised ring, is located in axial abutment with a stop surface of the shield and has teeth on its cylindrical surface which fit into corresponding seats in the shield. FR-A-2669728 discloses a similar system.

This known unit has disadvantages linked on the one hand to the differential thermal expansion to which its components may be subject because of the different materials from which they are made, which expansion can cause interference between elements of the unit which rotate relative to each other in use; and, on the other hand, connected to the manufacturing tolerances of the toothed couplings which are necessarily tight and the reduction of magnetised material of the ring which these involve.

The object of the present invention is to produce a sensor and sealing unit which is free from the problems described and, in particular, is simple and economical to construct and assemble.

According to the present invention this is achieved by a sensor and sealing unit for a rolling bearing adapted to seal, in a fluid-tight manner, an annular space formed between respective relatively-movable rings of the bearing and housing respective rolling bodies of the bearing, the unit including a shield which can be fixed in a fluid-tight manner to a first ring of the bearing and having an elastomeric sealing member adapted to cooperate in a fluid-tight manner with a sealing surface fixed to a second ring of the bearing and a signalling member formed by a magnetised ring adapted to cooperate with a detector device which can be fixed to the second ring; characterised in that the magnetised ring is housed with radial interference in an annular blind seat of the shield from which the magnetised ring projects axially in a cantilevered fashion on the opposite side from said space; means being provided for the axial snap-locking of the magnetised ring in said annular blind seat.

The invention will now be described with reference to the appended drawings which illustrate a non-limitative embodiment thereof, in which:
Figure 1 is a radial section through a sensor and sealing unit according to the present invention; and
Figure 2 is a radial section through a variant of a component of the sensor and sealing unit of Figure 1.

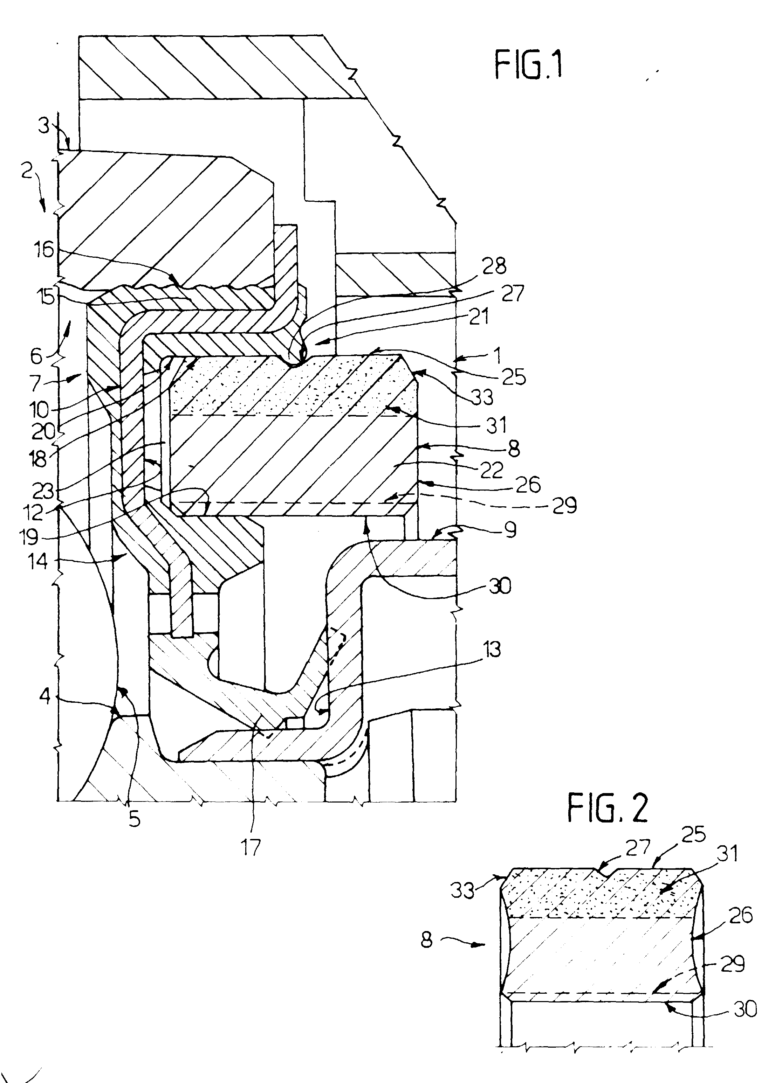

With reference to Figure 1, a sensor and sealing unit for a rolling bearing 2 of a vehicle is indicated 1.

The bearing 2 includes a rotatable outer ring 3; a fixed inner ring 4; and a plurality of rolling bodies 5 housed in a space 6 between the rings 3 and 4.

According to the present invention, the unit 1 includes a shield 7 located so as to close the space 6 and protect the rolling bodies 5 from external contaminants and to retain the lubricating grease within the bearing 2, and a signalling member 8 which cooperates with an external detector device (not illustrated) to detect the speed of rotation of a member supported for rotation by the bearing 2, for example a wheel hub (not illustrated) of a vehicle. More particularly, the unit 1 is fixed to the rotatable ring 3 of the bearing 2 while the detector device is carried in known manner, not illustrated for simplicity, by a closure element 9 which is constituted by a shield fixed to the fixed ring 4.

As illustrated in Figure 1, the shield 7 includes a core 10 of rigid material defining a support structure of the unit 1 and an elastomeric element 14 in which the core 10 is partly embedded.

The elastomeric element 14 has an upper portion 15 which is coupled in fluid-tight manner by a corrugated surface 16 to the ring 3 and a lower appendage 17 defining a V-shaped sealing lip which is located in fluid-tight sliding contact with a sealing surface 13 of the closure element 9 so as to form a seal with the ring 4. Moreover the elastomeric element 14 is shaped so as to present an annular blind seat 20 on the opposite side of the core 10 from the space 6, the blind seat being bounded by substantially cylindrical, mutually-facing walls 18 and 19 and by a base 12 defined by a surface of the core 10; the signalling member 8 is fixed within the seat 20 by friction against radial movement and by a snap-locking device 21 against axial movement.

The signalling member 8 is constituted by a magnetised ring which is housed partly within the seat 20 so that a portion 22 thereof projects axially out of the unit 1 on the opposite side from the space 6. Moreover, the signalling member 8 is located in this seat 20 so that an axial clearance 23 remains between the base 12 of the shield 7 and the magnetised ring 8. More particularly, the clearance 23 has a predetermined axial dimension which is greater than the maximum axial thermal expansion envisaged for the magnetised ring 8. This latter has a circumferential groove 27 of substantially V-shape in radial section in its outer peripheral wall 25 in a central position relative to its axial extent which is defined between two substantially flat end faces 26, the groove being snap-engaged by the locking device 21 to fix the signalling member 8 to the shield 7 against relative axial movement. More particularly, the locking device 21 comprises an annular projection 28 which projects radially inwardly of the seat 20 from the wall 18 of the elastomeric element 14 with which it is formed integrally. The magnetised ring 8 is, as already stated, clamped radially by interference within the annular seat 20 and thus, by virtue of the elastic yielding of the rubber walls 18 and 19, is subject to a compressive force which, through friction, keeps it fixed to the shield 7. This action of radial clamping by circumferential encircling is enhanced, in the embodiment illustrated, by the presence of an axial groove 29 formed in an inner peripheral wall 30 of the magnetised ring 8. In fact, this axial groove 29 is partly filled, in use, by an upset portion of the wall 19 of the elastomeric element 14 which forms a tooth thereon for locking it to signalling element 8 against relative rotation. In accordance with the invention, only the radially outermost portion 31 of the magnetised ring 8 is in fact magnetised, this portion being bounded by the outer peripheral wall 25 in which the circumferential groove 27 is formed, and the ring has bevelled edges 33 connecting its end faces 26 to its inner peripheral wall 30 and to its outer peripheral wall 25.

Figure 2 illustrates a variant of the signalling member 8 in which the end faces 26 are not flat but are concave inwardly of the magnetised ring 8 which thus does not run the risk of interfering accidentally with the detector device facing it in use.

From what has been described above, the advantages of the present sensor and sealing unit 1 will be clear. The signalling member 8 is locked to the shield 7 solely by the elastomeric element 14 which, in addition, insulates it from the heat which develops in the bearing 2 in use; this enables a locking system to be provided for the magnetised ring 8 which is both effective and economical. Moreover, any differential thermal expansion in the present unit 1 does not cause axial interference between the shield 7 and the signalling member 8 since such expansion can be compensated for by the axial clearance 23. Finally the fact that the signalling member 8 contacts solely the yielding walls 18 and 19 enables any radial differential expansion to be converted simply into increased interference which does none other than increase the clamping pressure on the components.

In the present unit 1, the type of coupling provided between the components does not require tight manufacturing tolerances and hence eliminates the problems of toothed couplings used in known units. Moreover, in the present unit 1, the axial locking achieved by the circumferential groove 27 in the magnetised ring 8 minimises the amount of magnetised material which must be removed and considerably simplifies the process by which the signalling member 8 is magnetised.

Finally, the central position of the circumferential groove 27, the extension of the axial groove 29 along the entire axial dimension of the magnetised ring 8 and the recessed configuration of both end surfaces 26 of the magnetised ring 8 give the signalling member 8 a symmetry which simplifies the assembly of the unit 1 and eliminates any assembly problems linked to the positioning and orientation of the signalling member 8 which are normally particularly serious, especially considering the small dimensions of the components in question.

The V-shape of the circumferential groove 27 enables the magnetised ring 8 to centre automatically, both axially and radially, on the shield 7 and minimises the clamping pressure on the annular projection 28. Moreover, any accidental contact between the signalling member 8 and the detector device cannot cause serious interference between the unit 1 and the detector device during rotation but, at most, causes anomalous wear of the edges 33.

It is clear that modifications and variations may be made to the present sensor and sealing unit 1 without thereby departing from the protective scope of the claims.

## Claims

1. A sensor and sealing unit (1) for a rolling bearing adapted to seal, in a fluid-tight manner, an annular space (6) formed between respective relatively movable first and second rings (3, 4) of said bearing (2) and housing respective rolling bodies (5) of the bearing (2), the unit (1) including a shield (7) which can be fixed in a fluid-tight manner to the first ring (3) of the bearing (2) and provided with an elastomeric sealing member (14) adapted to cooperate in a fluid-tight manner with a sealing surface (13) fixed to the second ring (4) of the bearing (2) , and a signalling member (8) formed by a magnetised ring (8) adapted to cooperate with a detector device which can be fixed to the second ring (4); said magnetised ring (8) being housed in an annular seat (20) of the shield (7) from which the magnetised ring (8) projects axially in a cantilevered fashion on the opposite side from said space (6); and means (21,27) being provided for the axial snap-locking of the magnetised ring (8) in said annular seat (20) ;
**characterised in that, in combination:**
(i)- said annular seat (20) is bounded in the radial direction by a first (18) and second (19) substantially cylindrical, mutually facing, peripheral walls, and by a base wall (12) defined by said shield (7);
(ii)- said magnetised ring (8) is fitted in said annular seat (20) with radial interference with said substantially cylindrical, mutually facing walls (18,19) of said seat (20);
(iii)- said magnetised ring (8) is fitted in said annular seat (20) with a prefixed axial clearance (23) provided between it and said base wall (12) of said annular seat (20) ;
(iv)- said axial clearance (23) being greater than the maximum axial thermal expansion expected for said magnetised ring (8).

2. A unit as claimed in Claim 1, characterised in that said axial snap-locking means (21, 27) are provided on said elastomeric member (14) and said magnetised ring (8).

3. A unit as claimed in Claim 2, characterised in that said annular seat (20) is formed in said elastomeric member (14), on the opposite side from said space (6), so that said walls (18,19) are rubber walls; said magnetised ring (8) being clamped radially by interference within the annular seat (20) by virtue of the elastic yelding of the rubber walls (18,19) so as to be subjected to a compressive force which, through friction, keeps it fixed to said shield (7).

4. A unit as claimed in Claim 3, characterised in that said axial snap-locking means (21, 27) provided on said magnetised ring (8) comprise a circumferential groove (27) provided in an outer peripheral wall (25) of said magnetised ring (8).

5. A unit as claimed in Claim 4, characterised in that the circumferential groove (27) is substantially V-shaped in radial section and is formed in a central position relative to the axial dimension of the magnetised ring (8).

6. A unit according to Claim 4 or Claim 5, characterised in that the axial snap-locking means (21,27) provided on the elastomeric element (14) comprise an annular projection (28) projecting radially inwardly of said annular seat (20) from the said first wall (18) of the elastomeric element (14); the annular projection (28) co-operating with interference with the circumferential groove (27) to lock the magnetised ring (8) to the shield (7) against relative axial movement.

7. A unit according to any one of Claims 4 to 6, characterised in that only the radially-outer portion (31) of the signalling member (8) is magnetised, this being bounded by the same outer peripheral wall (25) as that provided with the circumferential groove (27).

8. A unit according to any one of the preceding claims, characterised in that the magnetised ring (8) has at least one end face (26) facing the detector device which is concave inwardly of the magnetised ring (8).

9. A unit according to any one of the preceding claims, characterised in that the magnetised ring (8) has an axial groove (29) formed in its inner peripheral wall (30) over the entire axial length of the magnetised ring (8); the axial groove (29) being adapted to receive an upset portion of the elastomeric element (14) to lock the magnetised ring (8) to the shield (7) against relative rotation.

## Patentansprüche

1. Meß- und Dichtvorrichtung (1) für ein Wälzlager zum fluiddichten Abdichten eines zwischen relativ zueinander bewegbaren ersten und zweiten Ringen (3, 4) des Lagers (2) ausgebildeten ringförmigen Raumes (6), der die Wälzkörper (5) des Lagers (2) aufnimmt, wobei die Vorrichtung (1) einen Schild (7), der in fluiddichter Weise an dem ersten Ring (3) des Lagers (2) befestigbar und mit einem elastomeren Dichtelement (14) versehen ist, um in fluiddichter Weise mit einer an dem zweiten Ring (4) des Lagers (2) befestigten Dichtfläche (13) zusammenzuwirken, und ein Signalelement (8) umfaßt, das durch einen magnetisierten Ring (8) gebildet ist, der mit einer an dem zweiten Ring (4) befestigbaren Detektorvorrichtung zusammenwirkt und in einem ringförmigen Sitz (20) des Schildes (7) aufgenommen ist, aus welchem der magnetisierte Ring (8) in freitragender Weise auf der dem Raum (6) entgegengesetzt liegenden Seite axial hervorsteht, und Mittel (21, 27) zur axialen Schnappverriegelung des magnetisierten Ringes (8) in dem ringförmigen Sitz (20) vorgesehen sind, **dadurch gekennzeichnet**, daß in Kombination:
i) der ringförmige Sitz (20) durch eine erste (18) und eine zweite (19) Umfangswandung, die im wesentlichen zylindrisch und einander zugewandt sind, sowie eine durch den Schild (7) gebildete Grundwand (12) begrenzt ist;
ii) der magnetisierte Ring (8) unter radial gegenseitiger Beeinflussung mit den im wesentlichen zylindrischen, einander zugewandten Wandungen (18, 19) des Sitzes (20) in diesen eingefügt ist;
iii) der magnetisierte Ring (8) mit einem vorbestimmten axialen Spiel in den ringförmigen Sitz (20) eingefügt ist, das zwischen ihm und der Grundwand des ringförmigen Sitzes (20) vorgesehen ist;
iv) das axiale Spiel (23) größer als die maximal zu erwartende axiale thermische Ausdehnung des magnetisierten Rings (8) ist.

2. Vorrichtung nach Anspruch 1, **dadurch gekennzeichnet,** daß die Mittel (21, 27) zur axialen Schnappverriegelung an dem elastomeren Element (14) und dem magnetisierten Ring (8) vorgesehen sind.

3. Vorrichtung nach Anspruch 2, **dadurch gekennzeichnet,** daß der ringförmige Sitz (20) in dem elastomeren Element (14) auf der dem Raum (6) gegenüberliegenden Seite ausgebildet ist, so daß die Wandungen (18, 19) Gummiwandungen sind, wobei der magnetisierte Ring (8) durch gegenseitige Beeinflussung in dem ringförmigen Sitz (20) unter dem Einfluß der elastischen Nachgiebigkeit der Gummiwände (18, 19) radial festgeklemmt ist, um auf diese Weise einer Druckkraft ausgesetzt zu sein, die ihn infolge Reibung fest an dem Schild (7) hält.

4. Vorrichtung nach Anspruch 3, **dadurch gekennzeichnet,** daß die an dem magnetisierten Ring (8) vorgesehenen Mittel (21, 27) zur axialen Schnappverriegelung eine Umfangsnut (27) besitzen, die in einer Außenumfangswand (25) des magnetisierten Rings (8) angeordnet ist.

5. Vorrichtung nach Anspruch 4, **dadurch gekennzeichnet,** daß die Umfangsnut (27) in radialem Querschnitt im wesentlichen V-förmig und mit Bezug auf die axiale Abmessung des magnetisierten Rings (8) in einer mittigen Lage angeordnet ist.

6. Vorrichtung nach Anspruch 4 oder 5, **dadurch gekennzeichnet**, daß die an dem elastomeren Element (14) vorgesehenen Mittel (21, 27) zur axialen Schnappverriegelung einen ringförmigen Vorsprung (28) besitzen, der von der ersten Wandung (18) des elastomeren Elements (14) radial zum Inneren des ringförmigen Sitzes (20) weist und unter gegenseitiger Beeinflussung mit der Umfangsnut (27) zusammenwirkt, um den magnetisierten Ring (18) gegen eine relative axiale Bewegung gegen den Schild (7) zu verriegeln.

7. Vorrichtung nach einem der Ansprüche 4 bis 6, **dadurch gekennzeichnet**, daß nur der radial äußere Bereich (31) des Signalelements (8) magnetisiert ist, das durch die gleiche Außenumfangswand (25) begrenzt ist, welche mit der Umfangsnut (27) versehen ist.

8. Vorrichtung nach einem der vorhergehenden Ansprüche, **dadurch gekennzeichnet**, daß der magnetisierte Ring (8) wenigstens eine der Detektorvorrichtung zugewandte Stirnfläche (26) besitzt, die konkav zum Inneren des magnetisierten Rings (8) ist.

9. Vorrichtung nach einem der vorhergehenden Ansprüche, **dadurch gekennzeichnet**, daß der magnetisierte Ring (8) eine axiale Nut (29) besitzt, die über seine gesamte Länge an seiner inneren Umfangswand (30) ausgebildet ist und in der ein erhabener Teil des elastomeren Elements (14) aufnehmbar ist, um den magnetisierten Ring (8) gegen den Schild (7) gegen Relativdrehung zu verriegeln.

## Revendications

1. Unité (1) de mesure et d'étanchéité destinée à un palier de roulement, capable de fermer de manière étanche aux fluides un espace annulaire (6) formé entre des première et deuxième bagues (3, 4) dudit palier (2) pouvant tourner l'une par rapport à l'autre et abritant les corps roulants correspondants (5) du palier (2), ladite unité (1) comprenant un carter (7) qui peut être fixé de manière étanche aux fluides à la première bague (3) du palier (2) et qui comporte un élément d'étanchéité en élastomère (14) capable de coopérer de manière étanche aux fluides avec une surface d'étanchéité (13) fixée à la deuxième bague (4) du palier (2), et un organe de signalisation (8) formé par une bague aimantée (8) qui peut coopérer avec un dispositif de détection pouvant être fixé à la deuxième bague (4), ladite bague aimantée (8) étant disposée dans un logement annulaire (20) du carter (7) duquel la bague aimantée (8) dépasse axialement en porte-à-faux sur le côté opposé audit espace (6), et des moyens (21, 27) permettant de bloquer par encliquetage axial la bague aimantée (8) dans ledit logement annulaire (20),
caractérisée en ce que simultanément :
(i) ledit logement annulaire (20) est limité dans la direction radiale par des première (18) et deuxième (19) parois périphériques, sensiblement cylindriques et se faisant face, et par une paroi de base (12) définie par ledit carter (7),
(ii) ladite bague aimantée (8) est emboîtée dans ledit logement annulaire (20) de manière radialement ajustée avec lesdites parois (18, 19) sensiblement cylindriques et se faisant face dudit logement (20),
(iii) ladite bague aimantée (8) est emboîtée dans ledit logement annulaire (20) avec un jeu axial (23) prédéterminé entre elle-même et ladite paroi de base (12) dudit logement annulaire (20), et
(iv) ledit jeu axial (23) étant supérieur au maximum de la dilatation thermique axiale prévue pour ladite bague aimantée (8).

2. Unité selon la revendication 1, caractérisée en ce que lesdits moyens (21, 27) d'encliquetage axial sont placés sur ledit élément en élastomère (14) et ladite bague aimantée (8).

3. Unité selon la revendication 2, caractérisée en ce que ledit logement annulaire (20) est formé dans ledit élément en élastomère (14), sur le côté opposé audit espace (6), si bien que lesdites parois (18, 19) sont des parois en caoutchouc, ladite bague aimantée (8) étant serrée radialement de façon ajustée à l'intérieur du logement annulaire (20) en raison de l'élasticité desdites parois en caoutchouc (18, 19) de manière à subir une force de compression qui, par frottements, la maintient fixée audit carter (7).

4. Unité selon la revendication 3, caractérisée en ce que lesdits moyens (21, 27) d'encliquetage axial placés sur ladite bague aimantée (8) comprennent une rainure circonférentielle (27) formée dans une paroi périphérique extérieure (25) de ladite bague aimantée (8).

5. Unité selon la revendication 4, caractérisée en ce que la rainure circonférentielle (27) a une section radiale sensiblement en forme de V et est formée dans une position centrale par rapport à la longueur axiale de la bague aimantée (8).

6. Unité selon la revendication 4 ou la revendication 5, caractérisée en ce que lesdits moyens (21, 27) d'encliquetage axial placés sur l'élément en élastomère (14) comprennent une protubérance annulaire (28) faisant radialement saillie vers l'intérieur dudit logement annulaire (20) depuis ladite première paroi (18) de l'élément en élastomère (14), la protubérance annulaire (28) coopérant de façon ajustée avec la rainure circonférentielle (27) pour bloquer la bague aimantée (8) sur le carter (7) en l'empêchant de se déplacer axialement.

7. Unité selon l'une quelconque des revendications 4 à 6, caractérisée en ce que seule la partie radialement extérieure (31) de l'organe de signalisation (8) est aimantée, celle-ci étant limitée par la même paroi périphérique extérieure (25) que celle qui comporte la rainure circonférentielle (27).

8. Unité selon l'une quelconque des revendications précédentes, caractérisée en ce que la bague aimantée (8) comporte au moins une face d'extrémité (26), en vis-à-vis du dispositif de détection, qui est concave vers l'intérieur de la bague aimantée (8).

9. Unité selon l'une quelconque des revendications précédentes, caractérisée en ce que la bague aimantée (8) comporte une rainure axiale (29) formée dans sa paroi périphérique intérieure (30) sur toute la longueur axiale de la bague aimantée (8), ladite rainure axiale (29) étant apte à recevoir une partie relevée de l'élément en élastomère (14) pour bloquer la bague aimantée (8) sur le carter (7) en l'empêchant de tourner par rapport à lui.
